Europäisches Patentamt

European Patent Office

Office européen des brevets

(11) Veröffentlichungsnummer: **0 299 339**
**A1**

(12) # EUROPÄISCHE PATENTANMELDUNG

(21) Anmeldenummer: 88110741.1

(51) Int. Cl.4: **H02M 7/515**

(22) Anmeldetag: 05.07.88

(30) Priorität: 17.07.87 DE 3723740

(43) Veröffentlichungstag der Anmeldung:
18.01.89 Patentblatt 89/03

(84) Benannte Vertragsstaaten:
AT BE CH DE FR GB IT LI SE

(71) Anmelder: Siemens Aktiengesellschaft Berlin
und München
Wittelsbacherplatz 2
D-8000 München 2(DE)

(72) Erfinder: Kratz, Gerhard
Adelsgasse 17
D-8551 Heroldsbach(DE)

(54) Vorrichtung zur verlustarmen Beschaltung der Halbleiterschaltelemente eines
Dreipunktwechselrichters.

(57) Eine verlustarme Beschaltung insbesondere zur Ausschaltentlastung der Halbleiterschaltelemente in den Phasen eines Dreipunktwechselrichters besteht aus einem Ausschaltentlastungskondensator, welcher am Phasenausgang angeschlossen ist, je einem am oberen bzw. unteren Ende der jeweiligen Phase angeschlossenen Beschaltungskondensator und einem Diodennetzwerk.

Zusätzliche Gleichstromverbraucher, welche bevorzugt als ohmsche Widerstände bzw. Energierückspeisevorrichtungen ausgeführt sein können, nehmen Energie auf, welche in den Beschaltungskondensatoren zwischengespeichert ist.

FIG 3

## Vorrichtung zur verlustarmen Beschaltung der Halbleiterschaltelemente eines Dreipunktwechselrichters

Die Erfindung betrifft eine Vorrichtung zur Entlastung der Halbleiterschaltelemente einer Phase eines Dreipunktwechselrichters von großen Spannungsänderungen insbesondere während des Abschaltvorganges gemäß dem Oberbegriff von Anspruch 1.

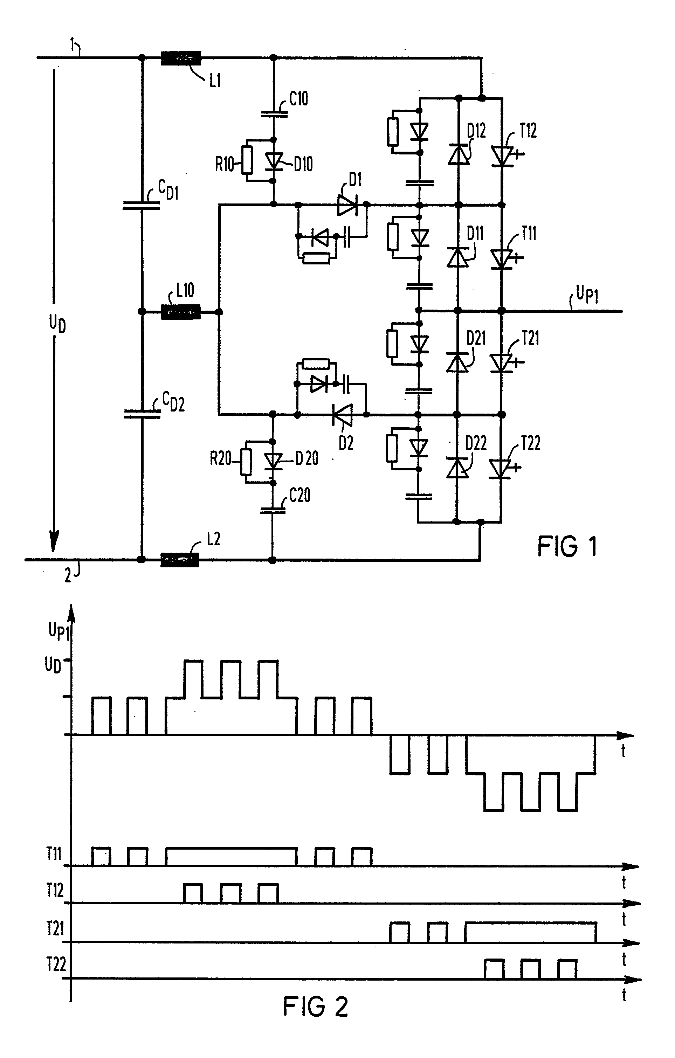

Der Leistungsteil eines "Dreipunktwechselrichters" ist z.B. aus der Veröffentlichung "A new neutral-point-clamped PWM inverter", in "IEEE Transactions On Industry Applications", Vol.IA-17, No. 5, September·October 1981, S. 518-521 gemäß der in der dortigen FIG 1 auf Seite 518 dargestellten Schaltung bekannt.

Eine Phase eines solchen Dreipunktwechselrichters ist auch in der beiliegenden FIG 1 dargestellt. Diese enthält eine Reihenanordnung von vier Antiparallelschaltungen aus je einem Halbleiterschaltelement und einer Freilaufdiode. Als Halbleiterschaltelemente können bevorzugt Leistungs-MOS-Feldeffekttransistoren bzw. abschaltbare Thyristoren ("GTO-Thyristoren") eingesetzt werden. Bei der Verwendung von Leistungs-Feldeffekttransistoren kann die jeweilige antiparallele Freilaufdiode aufgrund der häufig bereits bauelementeintern vorhandenen Inversdiode entfallen. In der in der FIG 1 dargestellten Phase sind beispielhaft vier GTO-Thyristoren T11, T12, T21, T22 verwendet, denen jeweils die Freilaufdioden D11, D12, D21, D22 antiparallel geschaltet sind. Die erste und zweite Antiparallelschaltung aus T11, D11 und T12, D12 bzw. die dritte und vierte Antiparallelschaltung aus T21, D21 und T22, D22 stellen dabei den oberen bzw. unteren Teil der dargestellten Wechselrichterphase dar. Die Reihenanordnung aus den vier Antiparallelschal tungen wird über vier Anschlußpunkte von einer Gleichspannungsquelle $U_D$ gespeist. Zum einen sind die Enden der Reihenanordnung über je eine Einschaltentlastungsdrossel an dem positiven bzw. negativen Potentialpunkt 1 bzw. 2 der Gleichspannungsquelle angeschlossen. Im Beispiel der FIG 1 sind diese erste und zweite Einschaltentlastungsdrossel mit L1 bzw. L2 bezeichnet. Die beiden anderen Anschlußpunkte entsprechen den Verbindungspunkten der ersten mit der zweiten bzw. der dritten mit der vierten Antiparallelschaltung. Diese sind über je eine erste bzw. zweite Koppeldiode D1 bzw. D2 und einer ebenfalls als Einschaltentlastungsdrossel dienenden Induktivität L10 an den Verbindungspunkt der Spannungsteilerkondensatoren $C_{D1}$ und $C_{D2}$ angeschlossen, welche wiederum von der Gleichspannungsquelle $U_D$ gespeist werden. Der Verbindungspunkt zwischen der zweiten und der dritten Antiparallelschaltung dient als Ausgang der Wechselrichterphase, an dem die in FIG 1 dargestellte Phasenspannung $U_{P1}$ abgegriffen werden kann. Die Einschaltentlastungsdrosseln L1, L2 und L10 müssen abhängig vom konkreten Schaltungsaufbau nicht immer in Form von diskreten Bauelementen vorhanden sein, sondern können gegebenenfalls auch mit Hilfe parasitärer Leitungsinduktivitäten gebildet werden.

In der beiliegenden FIG 2 ist schematisch ein mögliches Schaltspiel der Halbleiterschaltelemente der Wechselrichterphase von FIG 1 zur Erzeugung einer angenähert sinusförmigen Phasenausgangsspannung $U_{P1}$ dem Prinzip nach dargestellt. Dabei werden zusätzlich die in einer am Phasenausgang angeschlossenen Last in der Regel vorhandenen Lastinduktivitäten mit zur Glättung der Phasenausgangsspannung ausgenutzt. Zur Erzeugung z.B. einer positiven Halbwelle der Phasenausgangsspannung $U_{P1}$ wird der Thyristor T11 eine gewisse Zeit lang pulsartig ein- und ausgeschaltet. Danach schließt sich ein Bereich an, in dem der Thyristor T11 eingeschaltet bleibt und der Thyristor T12 pulsartig ein- und ausgeschaltet wird. Schließlich bleibt der Thyristor T12 ausgeschaltet, und es wird wiederum der Thyristor T11 pulsartig betätigt. Ein ähnliches Schaltspiel zur Erzeugung einer negativen Halbwelle ist für die Thyristoren T21 und T22 dargestellt. Das Verhältnis zwischen der Ein- und Ausschaltzeit für jeden Puls eines der Thyristoren kann dabei zusätzlich mit Hilfe des bekannten Verfahrens der Puls-Dauer-Modulation so variiert werden, daß die Phasenausgangsspannung der gewünschten Sinusform weiter angenähert wird. Zur besseren Übersicht sind in der FIG 2 modulationsbedingte Veränderungen im Verhältnis der jeweiligen Ein- und Ausschaltzeiten nicht dargestellt. Bei der Pulsung der Halbleiterschaltelemente T11 bzw. T21 und der Schaltelemente T12 bzw. T22 bei eingeschalteten Elementen T11 bzw. T21 wird jeweils zwischen dem Nullpotential und dem halben Potential bzw. dem halben und dem vollen Potential der Gleichspannungsquelle $U_D$ umgeschaltet. Diese Pulsung zwischen drei unterschiedlichen Potentialen bei dem vorliegenden "Dreipunktwechselrichter" ermöglicht eine noch genauere Annäherung der Phasenausgangsspannung an die gewünschte Sinusform, als dies bei dem bekannten "Zweipunktwechselrichter" der Fall ist. Bei diesem kann lediglich zwischen dem Nullpotential und dem vollen Potential der speisenden Gleichspannungsquelle puls-dauer-moduliert umgeschaltet werden.

In der Praxis ist der oben beschriebene reine Leistungsteil einer Phase eines Dreipunktwechselrichters, welcher prinzipiell eine Reihenanordnung von vier Antiparallelschaltungen, zwei Koppeldioden und Einschaltentlastungsdrosseln enthält, häufig noch nicht funktionsfähig. Vielmehr ist es vorteilhaft, zusätzliche Maßnahmen zur Ausschaltentlastung insbesondere für die Halbleiterschaltelemente und deren Freilaufdioden vorzusehen. Aus diesem Grund ist im Schaltbeispiel der FIG 1 jede der Antiparallelschaltungen aus einem GTO-Thyristor und der Freilaufdiode, und jede der Koppeldioden D1, D2 mit einem bekannten "RCD-Ausschaltentlastungsnetzwerk" versehen. Darüber hinausgehend ist es vorteilhaft, zusätzlich die beim Abschaltvorgang des oberen bzw. unteren Teiles einer Wechselrichter phase insbesondere in den Einschaltentlastungsdrosseln L1, L2 und L10 zwischengespeicherte Energie von den Halbleiterschaltelementen fernzuhalten und abzuleiten. Hierzu dienen zwei weitere zusätzliche RCD-Beschaltungsnetzwerke aus den Elementen C10, R10, D10 und C20, R20, D20, welche zwischen dem Verbindungspunkt der Einschaltentlastungsdrossel mit dem jeweiligen Ende der Reihenanordnung und dem Verbindungspunkt der jeweiligen Koppeldiode mit der weiteren Einschaltentlastungsdrossel L10 angeordnet sind. Eine mit solchen RCD-Netzwerken beschaltete Phase eines Dreipunktwechselrichters hat den Nachteil, daß der für die Beschaltung benötigte Bauteileaufwand recht groß ist und in den Beschaltungen erhebliche Verluste auftreten. Die beim Abschaltvorgang eines Halbleiterelementes anfallenden Energien werden dabei im ohmschen Widerstand des dazugehörigen RCD-Netzwerkes vernichtet. Die Verwendung von Energierückspeiseschaltungen anstelle der Widerstände in jedem der RCD-Netzwerke würde den Bauteileaufwand weiter erhöhen, da jede Rückspeiseschaltung die Energie von einem anderen Potentialpunkt aus in die Gleichspannungsquelle $U_D$ zurückspeisen mäßte.

Für die Phasen "Zweipunktwechselrichtern" sind bereits wirkungsgradoptimierte Beschaltungen bekannt, die mit einem Minimum an Bauelementen auskommen. So ist in der DE-OS 32 44 623 eine Schaltung angegeben, welche ganz ohne RCD-Beschaltungsnetzwerke auskommt, und die pro Wechselrichterphase · aus einem Abschaltentlastungskondensator, einem Speicherkondensator, zwei Abschaltentlastungsdioden und einem Gleichstromverbraucher besteht. Die in dieser Beschaltung anfallenden geringen Verluste können weiter reduziert werden, wenn als Gleichstromverbraucher statt eines ohmschen Widerstandes ein Gleichspannungswandler zur Energierückspeisung in die Gleichspannungsquelle verwendet wird.

Der vorliegenden Erfindung liegt die Aufgabe zugrunde, eine wirkungsgradoptimierte Beschaltung für die Halbleiterschaltelemente in der Phase eines Dreipunktwechselrichters anzugeben, welche mit einem Minimum an Bauelementen auskommt.

Die Aufgabe wird gelöst durch die kennzeichnenden Merkmale des Anspruches 1. Vorteilhafte Ausgestaltungen der erfindungsgemäßen Vorrichtung sind in den Unteransprüchen 2 bis 10 angegeben.

Die erfindungsgemäße Vorrichtung wird anhand der nachfolgend kurz angeführten Figuren 3 bis 9 näher erläutert. Dabei zeigt

FIG 1 eine Phase eines Dreipunktwechselrichters, welche in bekannter Weise mit RCD-Ausschaltentlastungsnetzwerken beschaltet ist,

FIG 2 schematisch ein mögliches Schaltspiel für die Halbleiterschaltelemente einer Phase eines Dreipunktwechselrichters,

FIG 3 eine mit der erfindungsgemäßen Beschaltungsvorrichtung versehene Phase eines Dreipunktwechselrichters,

FIG 4 eine mit einer weiteren Ausführungsform der erfindungsgemäßen Beschaltungsvorrichtung versehene Phase eines Dreipunktwechselrichters, bei der möglicherweise auftretende Kreisströme unterdrückt werden,

Figuren 5a bis 5d schematisch die in einer mit der erfindungsgemäßen Beschaltungsvorrichtung versehenen Phase eines Dreipunktwechselrichters auftretenden Übergangsvorgänge bei der Einschaltung eines Halbleiterschaltelementes,

Figuren 6a bis 6d schematisch die in einer mit der erfindungsgemäßen Beschaltungsvorrichtung versehenen Phase eines Dreipunktwechselrichters auftretenden Übergangsvorgänge bei der Abschaltung eines Halbleiterschaltelementes,

FIG 7 eine mit der erfindungsgemäßen Beschaltungsvorrichtung und zusätzlichen Energierückspeisevorrichtungen versehene Phase eines Dreipunktwechselrichters,

FIG 8 eine mit der weiteren Ausführungsform der erfindungsgemäßen Beschaltungsvorrichtung zur Kreisstromunterdrückung und zusätzlichen Energierückspeisevorrichtungen versehene Phase eines Dreipunktwechselrichters, und

FIG 9 mehrere mit der weiteren Ausführungsform der erfindungsgemäßen Beschaltungsvorrichtung zur Kreisstromunterdrückung und zusätzlichen Energierückspeisevorrichtungen versehene Phasen eines Dreipunktwechselrichters.

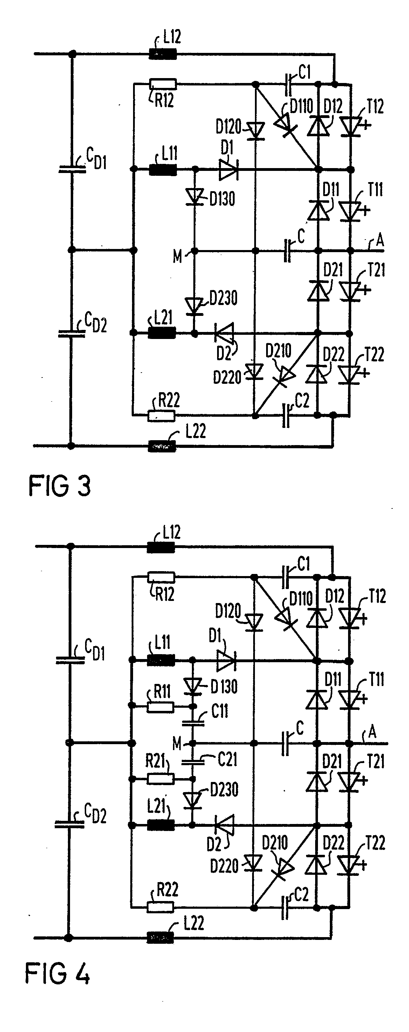

Eine vorteilhafte Ausführungsform der erfindungsgemäßen Vorrichtung ist in der FIG 3 dargestellt. Dabei ist die in der Schaltung von FIG 1 am Verbindungspunkt der Spannungsteilerkondensatoren $C_{D1}$ und $C_{D2}$ angeschlossene Einschaltentlastungsdrossel L10 aufgeteilt in die beiden Drosseln L11 und L21, welche als dritte und vierte Einschaltentlastungsdrosseln der jeweiligen Koppeldiode D1 bzw. D2 in Reihe geschaltet sind. Als ein wesentliches Element der erfindungsgemäßen Entlastungsvorrichtung ist ein Abschaltentlastungskondensator C mit einem Anschluß am Ausgang A der Wechselrichterphase zwischen der dritten und vierten Antiparallelschaltung angeschlossen. Beim Abschalten eines der Halbleiterschaltelemente im oberen bzw. unteren Teil der Wechselrichterphase wird die Anstiegsgeschwindigkeit der wiederkehrenden Spannung am Ausgang des jeweiligen Halbleiterschaltelementes durch die Auf- bzw. Entladegeschwindigkeit des Abschaltentlastungskondensators C begrenzt. Der Ladevorgang wird insbesondere dadurch ermöglicht, daß der andere Anschluß des Kondensators C mit dem Verbindungspunkt der beiden Spannungsteilerkondensatoren und mit dem positiven bzw. negativen Potential der Gleichspannungsquelle in Verbindung steht. In der vorteilhaften Ausführungsform der Erfindung gemäß der FIG 3 erfolgt die Verbindung mit den Spannungsteilerkondensatoren über zwei Beschaltungsdioden D130 bzw. D230, welche am Verbindungspunkt der Reihenschaltung aus der dritten bzw. vierten Einschaltentlastungsdrossel L11 bzw. L21 mit der ersten bzw. zweiten Koppeldiode D1 bzw. D2 angeschlos sen sind. Die Verbindung mit dem positiven bzw. negativen Potential der Gleichspannungsquelle erfolgt über eine Reihenanordnung aus je einem ersten Beschaltungskondensator C1 und einer dritten Beschaltungsdiode D120 bzw. einem zweiten Beschaltungskondensator C2 und einer vierten Beschaltungsdiode D220. Aufgrund dieser Verbindungen des anderen Anschlusses des Kondensators C und aufgrund seiner im Vergleich zur Kapazität der Beschaltungskondensatoren bevorzugt um den Faktor 10 bis 20 kleineren Kapazität weicht das Potential dieses Kondensatoranschlusses nur geringfügig von dem halben Spannungswert der Gleichspannungsquelle ab. Dieser Schaltungspunkt kann somit auch als "fiktiver Mittelpunkt M" bezeichnet werden. Die dritte bzw. vierte Einschaltentlastungsdrossel L11 bzw. L21 dient bei nicht stromführenden Schaltelementen T12 und T22 zur Stromanstiegsbegrenzung bei der Einschaltung einer der Schaltelemente T11 bzw. T21, während die erste bzw. zweite Einschaltentlastungsdrossel L12 bzw. L22 bei stromführendem Schaltelement T11 bzw. T21 zur Stromanstiegsbegrenzung bei der Einschaltung einer der Schaltelemente T12 bzw. T22 dient. Mit Hilfe von zwei weiteren Beschaltungsdioden, welche im Ausführungsbeispiel der FIG 3 mit D110 für den oberen bzw. D210 für den unteren Phasenteil bezeichnet sind, wird es ermöglicht, daß der Abschaltentlastungskondensator C je nach dem aktuellen Betriebszustand der Wechselrichterphase entlastend für die Abschaltung des Halbleiterschaltelementes T11 oder T12 bzw. T21 oder T22 wirkt. Je ein am jeweiligen Beschaltungskondensator C1 bzw. C2 angeschlossener, und im Ausführungsbeispiel der FIG 3 in Form eines ohmschen Widerstandes R12 bzw. R22 ausgeführter weiterer Gleichstromverbraucher sorgt für einen Abbau von vorübergehenden Überladungen in den Beschaltungskondensatoren.

Es ist ein Vorteil der erfindungsgemäßen Beschaltungsvorrichtung, daß bei der Umladung des Abschaltentlastungskondensators C während der Ein- bzw. Ausschaltung eines der Halbleiter schaltelemente eine Überladung dieses Kondensators vermieden wird, und somit die Spannungsbeanspruchung aller Halbleiterschaltelemente maximal auf den halben Wert der Gleichspannungsquelle begrenzt wird. Dies wird im wesentlichen dadurch erreicht, daß die insbesondere in den Einschaltentlastungsdrosseln L12, L22 und L11, L21 gespeicherte Energie, welche bei der Unterbrechung des Stromflusses nicht mehr zur Umladung des Abschaltentlastungskondensators verwendet werden kann, da dieser bereits auf den halben Spannungswert der Gleichspannungsquelle aufgeladen ist, von dem als Speicher dienenden ersten bzw. zweiten Beschaltungskondensator C1 bzw. C2 aufgenommen wird. Über die mit dem Verbindungspunkt der beiden Spannungsteilerkondensatoren verbundenen und als Gleichstromverbraucher dienenden ohmschen Widerstände R11 bzw. R22 wird diese Überladung ausgeglichen, so daß im zeitlichen Mittel auch an den Beschaltungskondensatoren der halbe Spannungswert der Gleichspannungsquelle anliegt. Es ist ein besonderer Vorteil der erfindungsgemäßen Beschaltungsvorrichtung, daß diese überladungsbedingten und als Verluste anfallenden Beschaltungsenergien im Gegensatz zu der in der FIG 1 dargestellten RCD-beschalteten Phase in einen gemeinsamen Potentialpunkt abgeführt werden können. Desweiteren zeichnet sich die erfindungsgemäße Beschaltungsvorrichtung dadurch aus, daß die Beschaltungsverluste erheblich geringer sind als bei einer mit RCD-Entlastungsnetzwerken beschalteten Phase, wie z.B. der in der FIG 1 dargestellten.

Abhängig von der konkreten Gestaltung eines praktischen Aufbaues eines mit der erfindungsgemäßen Vorrichtung versehenen Dreipunktwechselrichters, und den dadurch bedingten parasitären Induktivitäten und Kapazitäten, können Kreisströme in einer Masche auftreten, welche aus der dritten und vierten Einschaltentlastungsdrossel L11, L21 und der ersten und zweiten Beschaltungsdiode D130, D230 gebildet wird. In einer weiteren Ausgestaltung der Erfindung ist es somit besonders vorteilhaft, in diese Masche zusätzlich Mittel zur Kreisstromunterdrückung vorzusehen. In dem in der FIG 4 dargestellten weiteren Ausführungsbeispiel bestehen diese Mittel aus je einem zur Beschaltungsdiode D130 bzw. D230 in Reihe angeordneten dritten bzw. vierten Beschaltungskondensator C11 bzw. C21. Möglicherweise auftretende und insbesondere durch die in den Einschaltentlastungsdrosseln L11 bzw. L21 enthaltenen Energien bedingte Überladungen dieser Kondensatoren können auch hier vorteilhaft durch je einen mit dem Verbindungspunkt der Spannungsteilerkondensatoren verbundenen Gleichstromverbraucher abgeführt werden. Im Ausführungsbeispiel der FIG 4 ist dieser dritte bzw. vierte Gleichstromverbraucher wiederum als ein ohmscher Widerstand R11 bzw. R12 ausgeführt.

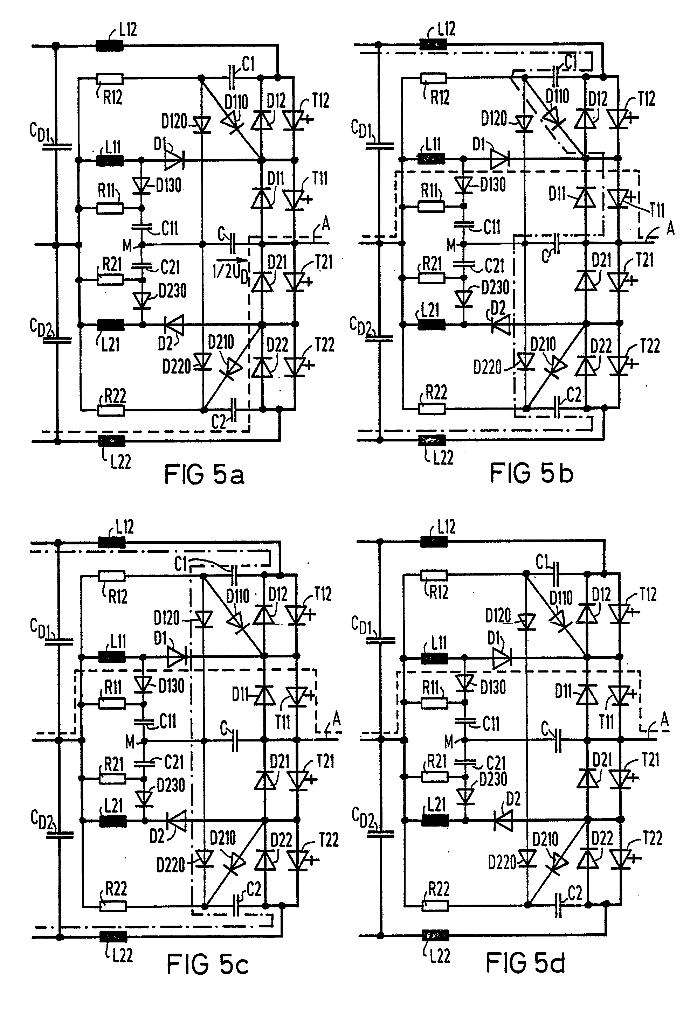

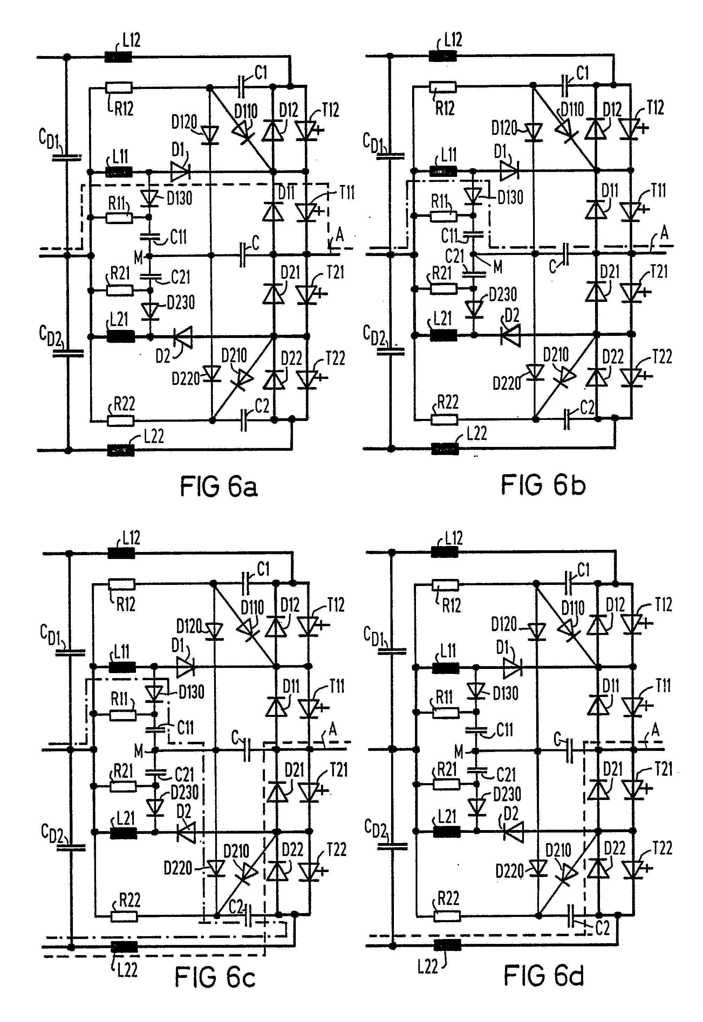

In den Figuren 5a bis 5d bzw. 6a bis 6d sind am Beispiel der weiteren Ausführungsform der Erfindung gemäß der Schaltung von FIG 4 die Stromverläufe schematisch dargestellt, die im Verlauf einer Ein- bzw. Abschaltung des Halbleiterschaltelementes T11 in Form von Übergangsvorgängen auftreten. In der FIG 5a ist ein Ausgangszustand dargestellt, bei dem alle Halbleiterschaltelemente als abgeschaltet zu betrachten sind und ein von der Last getriebener Strom über die Freilaufdioden D21, D22 der unteren Phasenhälfte zwischen dem Wechselrichterausgang A und dem negativen Potential der Gleichspannungsquelle fließt. Der Abschaltentlastungskondensator C sei auf den halben Spannungswert der Gleichspannungsquelle aufgeladen. Erhält nun das Halbleiterschaltelement T11 einen Einschaltbefehl, so kommutiert gemäß der Darstellung in FIG 5b mit beginnender Leitfähigkeit von T11 der Strom von den Freilaufdioden auf den über die erste Koppeldiode D1 führenden Strompfad, welcher den Verbindungspunkt der Spannungsteilerkondensatoren mit dem Wechselrichterausgang A verbindet. Die Einschaltentlastungsdrossel L11 begrenzt dabei die Anstiegeschwindigkeit dieses Stromflusses. Gleichzeitig bildet sich ein in der FIG 5b strichpunktiert dargestellter Umladestrom aus, der den ursprünglich auf den halben Spannungswert der Gleichspannungsquelle $U_D$ aufgeladenen Abschaltentlastungskondensator C entlädt. Ist die in der bisher stromführenden Einschaltentlastungsdrossel L22 enthaltene Energie noch nicht vollständig abgebaut, so nimmt der Umladestrom den in der FIG 5c strichpunktiert dargestellten Weg über die beiden Schaltungskondensatoren C1, C2 und die Beschaltungsdioden D120, D220. Hierdurch werden die Beschaltungskondensatoren vorübergehend überladen. Nach dem vollständigen Abbau der in der Einschaltentlastungsdrossel L22 enthaltenen Energie erlischt der in der FIG 5c strichpunktiert dargestellte Umladestrom, die Überladung der Beschaltungskondensatoren C1, C2 wird über die Gleichstromverbraucher R12, R22 ausgeglichen und es stellt sich in voller Höhe der in der FIG 5d dargestellte stationäre Stromfluß zwischen dem Verbindungspunkt der beiden Spannungsteilerkondensatoren und dem Ausgang der Wechselrichterphase ein.

Aufgrund der durch die Einschaltung des Schaltelementes T11 erfolgten Entladung des Kondensators C und aufgrund der Tatsache, daß somit die Spannung bei Umlauf in der aus den Elementen C, D120, C1, T12 und T11 gebildeten Masche Null ist, ist die erfindungsgemäße Abschaltentlastungsvorrichtung nun in der Lage, bei einer sich anschließenden Abschaltung desselben Schaltelementes durch Begrenzung des Anstieges der wiederkehrenden Spannung entlastend zu wirken. Die dabei auftretenden Übergangsvorgänge sind schematisch in den Figuren 6a bis 6d dargestellt. Dabei entspricht der in der FIG 6a dargestellte Ausgangszustand für die bevorstehende Abschaltung dem in der FIG 5d erreichten Endzustand nach einer Einschaltung. Wie in der FIG 6b dargestellt ist, kommutiert nach Auftreten eines Abschaltbefehles für T11 der Stromfluß von den Elementen D1, T11 auf die Elemente D130 und C. Hierdurch wird der ursprünglich entladene Abschaltentlastungskondensator C allmählich aufgeladen, und die sich so aufbauende Kondensatorspannung liegt über die Diode D1 ebenfalls an dem zu entlastenden Halbleiterschaltelement T11 an. Ist nach erfolgter vollständiger Aufladung des Abschaltentlastungskondensators C auf den halben Spannungswert von ᛫$U_D$ die in der Einschaltentlastungsdrossel L11 enthaltene Energie noch nicht vollständig abgebaut, so fließt der Umladestrom, wie in FIG 6c strichpunktiert dargestellt, weiter über die Beschaltungsdiode D220 und den Beschaltungskondensator C2. Dies führt zu einer Überladung des Kondensators C2, welche wiederum über einen als Gleichstromverbraucher dienenden Widerstand R22 ausgeglichen wird. Mit dem Abklingen dieses Umladestromes baut sich zunehmend ein von der Lastinduktivität getriebener Strom über die Freilaufdioden D21, D22 auf, so daß schließlich der in der FIG 6d dargestellte Endzustand erreicht wird, welcher wiederum identisch ist mit dem in FIG 5a dargestellten ursprünglichen Ausgangszustand.

In entsprechender Weise verlaufen die Umladevorgänge in der erfindungsgemäßen Beschaltung bei einer Ein- und Ausschaltung des Schaltelementes T21. Auch hierbei entlädt sich der zunächst auf den halben Spannungswert der Gleichspannungsquelle aufgeladene Abschaltentlastungskondensator C mit der Einschaltung von T21. Die Entlastungswirkung wird dann bei Ausschaltung von T21 durch erneute, allmähliche Aufladung von C bewirkt. Wird dagegen z.B. bei eingeschaltetem T11 zusätzlich das Schaltelement T12 eingeschaltet, so lädt sich der ursprünglich entladene Kondensator zunächst mit umgekehrten Vorzeichen auf den halben Spannungswert der Gleichspannungsquelle auf. Dennoch kann der Kondensator C bei einer sich anschließenden Abschaltung von T12 entlastend wirken, da zu Beginn des Abschaltvorganges der Beschaltungskondensator C1 nun auf den gleichen Spannungswert wie der Abschaltentlastungskondensator aufgeladen ist und somit die Spannung in der aus den Elementen C, D120, C1, T12 und T11 gebildeten Masche wiederum Null ist. Im Verlauf des Abschaltvorganges von T12 entlädt sich der Kondensator C und begrenzt somit die Anstiegsgeschwindigkeit der am Schaltelement T12 wiederkehrenden Spannung. Nun hat der Abschaltentlastungs kondensator C wieder den Ladezustand Null erreicht, um gegebenenfalls auch bei einer sich anschließenden, zusätzlichen Abschaltung von T11 entlastend wirken zu können.

Es ist ein somit besonderer Vorteil der erfindungsgemäßen Vorrichtung, daß der Abschaltentlastungskondensator C in jedem Fall den Spannungsanstieg bei der Ausschaltung irgendeines der Halbleiterschaltelemente in der Phase des Dreipunktwechselrichters begrenzt. Es müssen somit z.B. keinerlei zusätzliche anzusteuernde Schaltelemente in der Beschaltung selbst vorgesehen werden, welche z.B. eine Umschaltung der Einwirkung der Entlastungsvorrichtung auf den Leistungsteil z.B. der oberen bzw. unteren Phasenhälfte hervorruft.

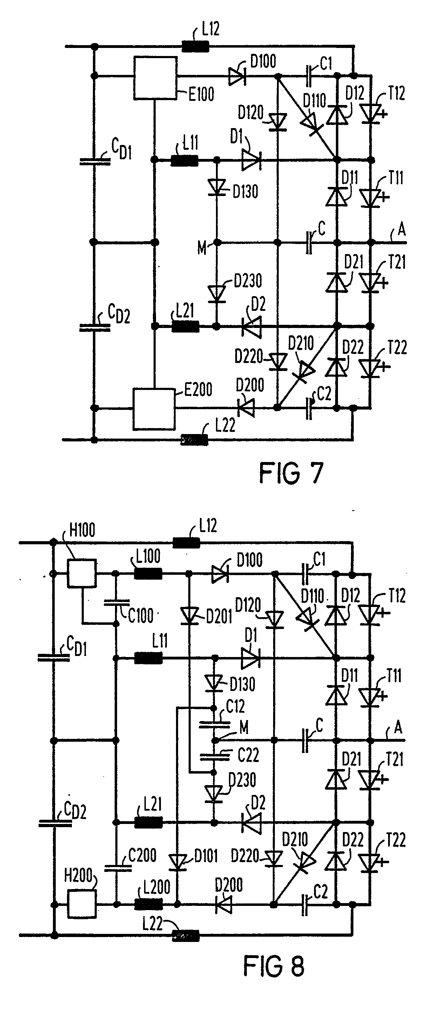

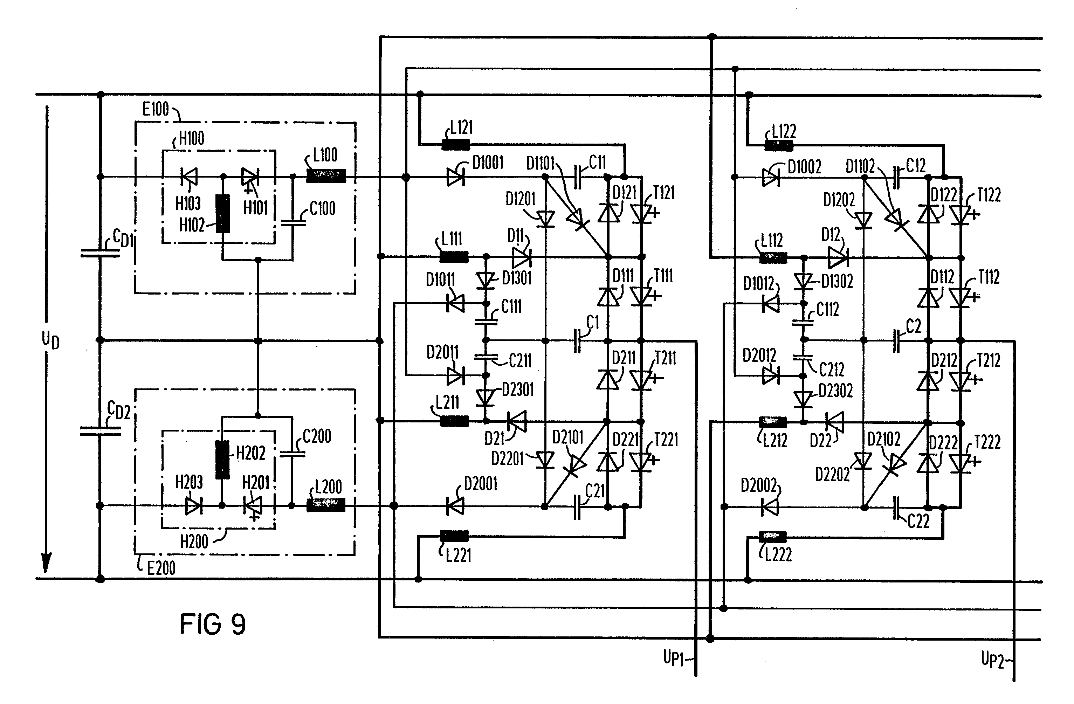

In einer weiteren Ausführungsform der Erfindung ist es besonders vorteilhaft, wenn die Gleichstromverbraucher durch Energierückspeisevorrichtungen ersetzt werden, an welche die Beschaltungskondensatoren über zusätzliche Ankopplungsdioden angeschlossen sind, und welche deren Energie in die Gleichspannungsquelle $U_D$ zurückspeisen. In der Ausführungsform gemäß der FIG 3 betrifft dies die Gleichstromverbraucher R12, R22 der Kondensatoren C1, C2, bzw. in der Ausführungsform gemäß der FIG 4 die Gleichstromverbraucher R12, R11, R21, R22 der Kondensatoren C1, C2, C11, C21. In einer weiteren Ausgestaltung ist es besonders vorteilhaft, wenn für jede der beiden Hälften einer Wechselrichterphase nur eine einzige Energierückspeisevorrichtung vorgesehen ist, an die alle Beschaltungskondensatoren der jeweiligen Phasenhälfte angeschlossen sind und die die Kondensatorenergie in das positive bzw. negative Potential der Gleichspannungsquelle zurückspeisen. So zeigen die Figuren 7 und 8 die mit den zusätzlichen Energierückspeisevorrichtungen E100 und E200 ausgerüsteten und den in den Figuren 3 und 4 dargestellten Ausführungsformen entsprechenden Schaltungen der erfindungsgemäßen Beschaltungsvorrichtung. Als Ankoppeldioden dienen dabei in FIG 7 die Dioden D100, D200 bzw. in FIG 8 die Dioden D100, D101, D200, D201. Darüber hinausgehend ist in der FIG 8 eine besonders vorteilhafte Ausführungsform für die Energierückspeisevorrichtungen im Detail dargestellt. Sie besteht aus einer zwischen der dazugehörigen Ankoppeldiode und dem Verbindungspunkt der beiden Spannungsteilerkondensatoren angeschlossenen Eingangsbeschaltung aus einer Reihenanordnung von einer Eingangsdrossel L100 bzw. L200 und einem Eingangskondensator C100 bzw. C200. Dem Eingangskondensator ist ein Hochsetzsteller H100 bzw. H200 parallel geschaltet, welcher die Kondensatorenergie in das positive bzw. negative Potential der Gleichspannungsquelle $U_D$ zurückspeist. Eine vorteilhafte Ausführungsform dieses Hochsetzstellers wiederum ist im linken Teil der in der FIG 9 dargestellten Schaltung enthalten. Diese enthält eine dem jeweiligen Eingangskondensator C100 bzw. C200 parallel geschaltete Reihenanordnung aus einem Halbleiterschaltelement H101 bzw. H201, insbesondere einen GTO-Thyristor, und einer Speicherinduktivität H102 bzw. H202. Zusätzliche Dioden H103 bzw. H203 stellen schließlich die Verbindung des Hochsetzstellers mit dem positiven bzw. negativen Potential der Gleichspannungsquelle her. Zur Energierückspeisung wird das Halbleiterschaltelement des jeweiligen Hochsetzstellers kurzzeitig so lange eingeschaltet, bis die im Eingangskondensator zwischengespeicherte Energie in die Speicherdrossel übergegangen ist. Wird danach das Halbleiterschaltelement wieder gesperrt, so hält die Speicherinduktivität den Stromfluß über die jeweilige Diode so lange aufrecht, bis die gesamte Energie in die Gleichspannungsquelle zurückgespeist ist.

In der Regel enthält ein Wechselrichter mehrere Phasen, um ein mehrphasiges, insbesondere dreiphasiges Wechselstromsystem an seinem Ausgang zu erzeugen. Jede Phase kann dabei mit der erfindungsgemäßen Beschaltung gemäß den in den Figuren 3 oder 4 dargestellten Ausführungsformen versehen werden. Werden entsprechend den in den Figuren 7 und 8 dargestellten Ausführungsformen Energierückspeisevorrichtungen als Gleichstromverbrau cher für die Energie der Beschaltungskondensatoren verwendet, so ist es in einer weiteren Ausführungsform der Erfindung besonders vorteilhaft, wenn für alle Wechselrichterphasen jeweils nur eine am positiven und eine am negativen Potential der Gleichspannungsquelle angeschlossene Energierückspeisevorrichtung vorgesehen ist. In der FIG 9 ist eine entsprechende Anordnung am Beispiel von zwei Wechselrichterphasen dargestellt. Dabei sind jeweils zwei der vier Beschaltungskondensatoren einer jeden Phase für alle Phasen gemeinsam über entsprechende Ankopplungsdioden an einer einzigen Energierückspeisevorrichtung angeschlossen. So verbinden z.B. die Ankopplungsdioden D1001, D2011 und D1002, D2012 die Beschaltungskondensatoren C11, C211 und C12, C212 mit der Rückspeisevorrichtung E100.

## Ansprüche

1. Vorrichtung zur Entlastung der Halbleiterschaltelemente einer Phase eines Dreipunktwechselrichters von großen Spannungsänderungen insbesondere während des Abschaltvorganges, wobei die Wechselrichterphase eine Reihenanordnung von vier Antiparallelschaltungen aus je einem Halbleiterschaltelement (T11, T12, T21, T22) und einer Freilaufdiode (D11, D12, D21, D22) enthält, der Verbindungspunkt der zweiten mit der dritten Antiparallelschaltung als Phasenausgang (A) dient und die Phase von einer Gleichspannungsquelle (U_D) gespeist wird, wobei das jeweilige Ende der Reihenanordnung über eine erste bzw. zweite Einschaltentlastungsdrossel (L12, L22) mit dem positiven bzw. negativen Potential der Gleichspannungsquelle (U_D) verbunden ist und die Verbindungspunkte zwischen der ersten und zweiten bzw. dritten und vierten Antiparallelschaltung über eine erste bzw. zweite Koppeldiode (D1, D2) und Mittel zur Stromanstiegsbegrenzung an den Verbindungspunkt von zwei Spannungsteilerkondensatoren (C_D1, C_D2) angeschlossen sind, welche von der Gleichspannungsquelle (U_D) gespeist werden, **gekennzeichnet durch**

a) eine dritte und vierte Einschaltentlastungsdrossel (L11, L21) als Mittel zur Stromanstiegsbegrenzung, welche der ersten bzw. zweiten Koppeldiode (D1, D2) in Reihe geschaltet sind,

b) einen Abschaltentlastungskondensator (C), dessen einer Anschluß mit dem Phasenausgang (A) verbunden ist,

c) einen ersten und zweiten Beschaltungskondensator (C1, C2), wobei der eine Anschluß des ersten Kondensators (C1) mit dem am positiven Potential bzw. der eine Anschluß des zweiten Kondensators (C2) mit dem am negativen Potential der Gleichspannungsquelle (U_D) angeschlossenen Ende der Reihenanordnung verbunden ist,

d) einen ersten und zweiten Gleichstromverbraucher (R12, R22), welche den anderen Anschluß des ersten bzw. zweiten Beschaltungskondensators (C1, C2) mit dem Verbindungspunkt der beiden Spannungsteilerkondensatoren (C_D1, C_D2) verbinden, und

e) ein Diodennetzwerk, wobei eine erste und zweite Beschaltungsdiode (D130, D230) den fiktiven Mittelpunkt (M) am anderen Anschluß des Abschaltentlastungskondensators (C) mit dem Verbindungspunkt zwischen der ersten Koppeldiode (D1) und der dritten Einschaltentlastungsdrossel (L11) bzw. der zweiten Koppeldiode (D2) und der vierten Einschaltentlastungsdrossel (L21) verbinden, wobei eine dritte und vierte Beschaltungsdiode (D120, D220) den fiktiven Mittelpunkt (M) mit dem Verbindungspunkt zwischen dem ersten Beschaltungskondensator (C1) und dem ersten Gleichstromverbraucher (R12) bzw. dem zweiten Beschaltungskondensator (C2) und dem zweiten Gleichstromverbraucher (R22) verbinden, und wobei eine fünfte und sechste Beschaltungsdiode (D110, D210) den Verbindungspunkt zwischen dem ersten Beschaltungskondensator (C1) und dem ersten Gleichstromverbraucher (R12) bzw. dem zweiten Beschaltungskondensator (C2) und dem zweiten Gleichstromverbraucher (R22) mit dem Verbindungspunkt zwischen der ersten und zweiten bzw. dritten und vierten Antiparallelschaltung verbinden (FIG 3).

2. Vorrichtung nach Anspruch 1 ,**dadurch gekennzeichnet,** daß in der aus der dritten und vierten Einschaltentlastungsdrossel (L11, L21) und der ersten und zweiten Beschaltungsdiode (D130, D230) gebildeten Masche Mittel zur Kreisstromunterdrückung vorhanden sind.

3. Vorrichtung nach Anspruch 2 mit Mitteln zur Kreisstromunterdrückung, **gekennzeichnet durch**

a) einen dritten und vierten Beschaltungskondensator (C11, C21), welche der ersten bzw. zweiten Beschaltungsdiode (D130, D230) in Reihe geschaltet sind, und

b) einen dritten und vierten Gleichstromverbraucher (R11, R21), welche den Verbindungspunkt zwischen der ersten Beschaltungsdiode (D130) und dem dritten Beschaltungskondensator (C11) bzw. der zweiten Beschaltungsdiode (D230) und dem vierten Beschaltungskondensator (C21) mit dem Verbindungspunkt der beiden Spannungsteilerkondensatoren (C_D1, C_D2) verbinden.

4. Vorrichtung nach einem der Ansprüche 1 bis 3, **gekennzeichnet durch** ohmsche Widerstände als Gleichstromverbraucher.

5. Vorrichtung nach einem der Ansprüche 1 bis 3, **gekennzeichnet durch** mit der Gleichspannungsquelle verbundene Energierückspeisevorrichtungen als Gleichstromverbraucher, welche über Ankopplungsdioden von den Beschaltungskondensatoren gespeist werden.

6. Vorrichtung nach Anspruch 5, **gekennzeichnet durch** je eine am positiven bzw. negativen Potential der Gleichspannungsquelle (U_D) angeschlossene Energierückspeisevorrichtung (E100, E200) (Figuren 7 und 8).

7. Vorrichtung mit einer Energierückspeisevorrichtung (E100 bzw. E200) nach Anspruch 5 oder 6 , **gekennzeichnet durch** eine Eingangsbeschaltung aus einer Reihenanordnung von einer an den Ankoppeldioden (D100, D200 bzw. D101, D201) angeschlossenen Eingangsdrossel (L100 bzw. L200) und einem am Verbindungspunkt der Spannungsteilerkondensatoren (C$_{D1}$, C$_{D2}$) angeschlossenen Eingangskondensator (C100 bzw. C200), wobei dem Eingangskondensator ein mit dem jeweiligen Potential der Gleichspannungsquelle verbundener Hochsetzsteller (H100 bzw. H200) parallel geschaltet ist (FIG 8).

8. Vorrichtung mit einem Hochsetzsteller (H100 bzw. H200) nach Anspruch 7 , **gekennzeichnet durch** eine dem Eingangskondensator (C100 bzw. C200) parallel geschaltete Reihenanordnung aus einem Halbleiterschaltelement (H101 bzw. H202) und einer Speicherinduktivität (H102 bzw. H202), wobei der Verbindungspunkt zwischen Halbleiterschaltelement und Umschwinginduktivität über eine Diode (H103 bzw. H104) am jeweiligen Potential der Gleichspannungsquelle (U$_D$) angeschlossen ist (FIG 9).

9. Vorrichtung nach einem der Ansprüche 6 bis 8 , **dadurch gekennzeichnet,** daß die Beschaltungskondensatoren weiterer Phasen des Dreipunktwechselrichters über Ankopplungsdioden (D1002, D2012 und D2002, D1012) an der am positiven bzw. negativen Potential der Gleichspannungsquelle angeschlossenen Energierückspeisevorrichtung (E100, E200) angeschlossen sind (FIG 9).

10. Vorrichtung nach einem der vorangegangenen Ansprüche , **gekennzeichnet durch** abschaltbare Thyristoren ("GTO-Thyristoren") als Halbleiterschaltelemente.

FIG 1

FIG 2

FIG 3

FIG 4

FIG 5a

FIG 5b

FIG 5c

FIG 5d

FIG 6a

FIG 6b

FIG 6c

FIG 6d

FIG 7

FIG 8

FIG 9

# EUROPÄISCHER RECHERCHENBERICHT

**Europäisches Patentamt**

Nummer der Anmeldung

EP 88 11 0741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 430 308 (R. MARQUARDT)<br>* Zusammenfassung; Figur 1 *<br>--- | 1,10 | H 02 M 7/515 |
| A | DE-A-2 837 361 (K. KOMMISSARI)<br>* Seite 1, Zeile 1 - Seite 2, Zeile 2 *<br>--- | 1 | |
| A | FR-A-2 245 123 (BBC)<br>* Seite 13, Zeile 33 - Seite 14, Zeile 4 *<br>--- | 1 | |
| D,A | DE-A-3 244 623 (R. MARQUARDT)<br>--- | | |
| D,A | IEEE TRANSACTIONS ON INDUSTRY APPLICATIONS, Band IA-17, Nr. 5. September/Oktober 1981, Seiten 518-523, IEEE; A. NABAE et al.: "A new neutral-point-clamped PWM inverter"<br>----- | | |

**RECHERCHIERTE SACHGEBIETE (Int. Cl.4)**

H 02 M
H 03 K

Der vorliegende Recherchenbericht wurde für alle Patentansprüche erstellt

| Recherchenort | Abschlußdatum der Recherche | Prüfer |
|---|---|---|
| DEN HAAG | 11-11-1988 | MOUEZA, A.J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)